Europäisches Patentamt

European Patent Office

Office européen des brevets

(11) Publication number : **0 210 856**
**B1**

(12) # EUROPEAN PATENT SPECIFICATION

(45) Date of publication of patent specification :
03.01.90

(51) Int. Cl.⁵ : **C 23 F 11/14, C 23 F 11/16**

(21) Application number : 86305764.2

(22) Date of filing : 25.07.86

(54) Corrosion-inhibiting compositions.

(30) Priority : 30.07.85 US 760383

(43) Date of publication of application :
04.02.87 Bulletin 87/06

(45) Publication of the grant of the patent :
03.01.90 Bulletin 90/01

(84) Designated contracting states :
BE DE FR GB IT LU NL

(56) References cited :
DE--A-- 2 841 908

(73) Proprietor : CALGON CORPORATION
Route 60-Campbell's Run Road
Robinson Township Pennsylvania 15205 (US)

(72) Inventor : Klindera, William M.
11520 S. 91st East Avenue
Bixby Oklahoma 74008 (US)

(74) Representative : Crampton, Keith John Allen et al
D YOUNG & CO 10 Staple Inn
London WC1V 7RD (GB)

EP 0 210 856 B1

**Description**

The present invention relates to corrosion-inhibiting compositions. Mercaptobenzothiazole and tolyltriazole, individually, are well known copper-corrosion inhibitors. In addition, UK Patent Specification GB-A-2 005 243 and the corresponding German Specification DE-A-2 841 908 disclose metal corrosion inhibitors comprising (a) benzoic acid and/or a benzoate, (b) nitrous acid and/or a nitrite, (c) phosphoric acid and/or a phosphate, and (d) at least one compound selected from mercaptobenzothiazole, its salts, benzotriazole and tolyltriazole.

The present invention is based on the surprising discovery that the presence of both mercaptobenzothiazole and tolyltriazole in aqueous systems provides significantly better corrosion inhibition of copper and copper alloys than either of the components alone.

The present invention provides a composition useful for inhibiting the corrosion of copper and copper alloys in contact with an aqueous system that consists of mercaptobenzothiazole and tolyltriazole.

The present invention also provides a method of inhibiting the corrosion of copper and copper alloys in contact with an aqueous system comprising adding to the aqueous system, so that its concentration is maintained at at least 0.1 ppm, a composition consisting of mercaptobenzothiazole and tolyltriazole, where ppm means « parts per million by weight ».

The compositions of the present invention effectively inhibit the corrosion of copper and copper alloy metals when maintained in an aqueous system in contact with copper and copper alloy metals at a concentration of at least 0.1 ppm, preferably 0.5 to 100 ppm and particularly 1-10 ppm. Maximum concentrations are determined by the economic considerations of the particular application.

Although any combination of mercaptobenzothiazole and tolyltriazole may be used, compositions having a mercaptobenzothiazole : tolyltriazole weight ratio of 1 : 3 to 3 : 2 are especially synergistic. The preferred MBT : TT weight ratio is 1 : 1.5 to 1.5 : 1.

## Examples

Copper corrosion tests were conducted in water containing 0.083 % by weight sodium chloride (500 ppm $Cl^-$) at 50 °C and a pH of 7.0 under full aeration. The corrosion rates shown in the tables were obtained using 443 admiralty brass coupons and are expressed in mils per year (mpy) and micrometres per year ($\mu$py).

Corrosion rate data for the examples were obtained using an electrochemical technique known as Linear Polarization. By this technique, the metal of interest is polarized $\pm$ 10 mV and the current produced is measured as a function of potential. The slope of the i vs. E trace is the polarization resistance, $R_p$, which is inversely proportional to the corrosion current, $i_{corr}$. The corrosion current is converted from coul-sec$^{-1}$-cm$^{-2}$ to mpy and $\mu$py using Faraday's Law. This is a comparative test and data produced are most accurately interpreted as percent improvement, or percent inhibition. Coupons were tested in a 0.083 weight % NaCl solution at 50 °C, with the pH adjusted to 7.0. Coupon preparation consisted of metallographic polishing to a 1.0 $\mu$m finish followed by ultrasonic cleaning in acetone to ensure complete grease and oxide removal.

To obtain the synergism data, the coupons were aerated for 24 hours in the presence of the inhibitor blend being tested. The corrosion rate was measured after 24 hours. Chlorine was added as reagent grade sodium hypochlorite, and corrosion rates were again measured in three hours. The beakers were sealed and unstirred during this three-hour residence time, and total chlorine dropped to about 90 % of the original concentration. Chlorine levels were measured using amperometric titration. The admiralty brass coupons had the following composition, by weight :

| | |
|---|---|
| Copper | 70.85 % |
| Zinc | 27.96 |
| Lead | 0.01 |
| Iron | 0.02 |
| Tin | 1.11 |
| Arsenic | 0.05 |

## Examples 1-8

These examples demonstrate the synergistic benefit of MBT/TT compositions on copper corrosion, with and without chlorination.

(See Table 1 page 3)

Table 1

| Example No. | MBT:TT Ratio | Corrosion Rate | | Corrosion rate After 3 Hour Chlorination at 1.0 ppm Chlorine | |
|---|---|---|---|---|---|
| | | (mpy) | (µpy) | (mpy) | (µpy) |
| 1* | No Inhibitor | 0.54 | 13.716 | - | - |
| 2* | 0.0 ppm MBT:2.0 ppm TT | 0.0085 | 0.216 | 0.0095 | 0.241 |
| 3 | 0.4 ppm MBT:1.6 ppm TT | 0.0080 | 0.203 | 0.0090 | 0.229 |
| 4 | 0.8 ppm MBT:1.2 ppm TT | 0.0060 | 0.152 | 0.0070 | 0.178 |
| 5 | 1.0 ppm MBT:1.0 ppm TT | 0.0050 | 0.127 | 0.0060 | 0.152 |
| 6 | 1.2 ppm MBT:1.0 ppm TT | 0.0060 | 0.152 | 0.0085 | 0.216 |
| 7 | 1.6 ppm MBT:1.0 ppm TT | 0.010 | 0.254 | 0.24 | 6.096 |
| 8* | 2.0 ppm MBT:0.0 ppm TT | 0.29 | 7.366 | 0.36 | 9.144 |

*Comparison Examples

The improved inhibition of MBT : TT blends in an aggressive aqueous system containing 550 ppm of Cl⁻ ions is surprising and unexpected. It is noteworthy that no synergism was found in aqueous systems containing 3.0 % NaCl (simulating sea water).

Examples 9-12

These examples demonstrate the effect of chlorination on a 1 : 1 MBT : TT inhibitor.

| Example No. | Inhibitor Dosage | Chlorine Dosage | Corrosion Rate | |
|---|---|---|---|---|
| | (ppm) | (ppm) | (mpy) | (µpy) |
| 9 | 2.0 | 0.0 | .0050 | 0.127 |
| 10 | 2.0 | 1.0 | .0080 | 0.203 |
| 11 | 2.0 | 2.0 | .0070 | 0.178 |
| 12 | 2.0 | 5.0 | 0.28 | 7.112 |

These examples show that coupons prefilmed with a 1 : 1 MBT : TT composition are relatively insensitive to chlorination.

**Claims**

1. A composition useful for inhibiting the corrosion of copper and copper alloys in contact with an aqueous system that consists of mercaptobenzothiazole and tolyltriazole.

2. A composition as claimed in Claim 1 in which the weight ratio of mercaptobenzothiazole to tolyltriazole is from 1 : 3 to 3 : 2.

3. A composition as claimed in Claim 2 in which the weight ratio of mercaptobenzothiazole to tolyltriazole is from 1 : 1.5 to 1.5 : 1.

4. A method of inhibiting the corrosion of copper and copper alloys in contact with an aqueous system comprising adding to the aqueous system, so that its concentration is maintained at at least 0.1 ppm, a composition consisting of mercaptobenzothiazole and tolyltriazole, where ppm means « parts per million by weight ».

5. A method as claimed in Claim 4 in which the weight ratio of mercaptobenzothiazole to tolyltriazole is from 1 : 3 to 3 : 2.

6. A method as claimed in Claim 4 in which the weight ratio of mercaptobenzothiazole to tolyltriazole is from 1 : 15 to 1.5 : 1.

7. A method as claimed in any one of Claims 4 to 6 in which from 0.5 to 100 ppm of the composition is maintained in the system.

8. A method as claimed in Claim 7 in which from 1.0 to 10 ppm of the composition is maintained in the system.

9. A method as claimed in any one of Claims 4 to 8 in which the aqueous system contains up to 500 ppm of Cl⁻ ions.

10. A method as claimed in any one of Claims 4 to 8 in which the aqueous system is chlorinated.

**Patentansprüche**

1. Zur Inhibierung der Korrosion von Kupfer und Kupferlegierungen in Kontakt mit einem wässrigen System geeignete Zusammensetzung, welche aus Mercaptobenzothiazol und Tolyltriazol besteht.

2. Zusammensetzung, wie in Anspruch 1 beansprucht, worin das Gewichtsverhältnis von Mercaptobenzothiazol zu Tolyltriazol 1 : 3 bis 3 : 2 beträgt.

3. Zusammensetzung, wie in Anspruch 2 beansprucht, worin das Gewichtsverhältnis von Mercaptobenzothiazol zu Tolyltriazol 1 : 1,5 bis 1,5 : 1 beträgt.

4. Verfahren zur Inhibierung der Korrosion von Kupfer und Kupferlegierungen in Kontakt mit einem wässrigen System, welches die Zugabe einer Zusammensetzung, die aus Mercaptobenzothiazol und Tolyltriazol zu dem wässrigen System umfaßt, so daß ihre Konzentration auf wenigstens 0,1 ppm gehalten wird, wobei ppm « parts per million nach Gewicht » bedeutet.

5. Verfahren, wie in Anspruch 4 beansprucht, worin das Gewichtsverhältnis von Mercaptobenzothiazol zu Tolyltriazol 1 : 3 bis 3 : 2 beträgt.

6. Verfahren, wie in Anspruch 4 beansprucht, worin das Gewichtsverhältnis von Mercaptobenzothiazol zu Tolyltriazol 1 : 1,5 bis 1,5 : 1 beträgt.

7. Verfahren, wie in einem der Ansprüche 4 bis 6 beansprucht, worin 0,5 bis 100 ppm der Zusammensetzung im System aufrechterhalten werden.

8. Verfahren, wie in Anspruch 7 beansprucht, worin 1,0 bis 10 ppm der Zusammensetzung im System aufrechterhalten werden.

9. Verfahren, wie in einem der Ansprüche 4 bis 8 beansprucht, worin das wässrige System bis zu 500 ppm Cl⁻-Ionen enthält.

10. Verfahren, wie in einem der Ansprüche 4 bis 8 beansprucht, worin das wässrige System chloriert ist.

**Revendications**

1. Composition utile pour inhiber la corrosion du cuivre et d'alliages de cuivre en contact avec un système aqueux qui comprend du mercaptobenzothiazole et du tolyltriazole.

2. Composition selon la revendication 1, dans laquelle le rapport pondéral du mercaptobenzothiazole au tolyltriazole est compris entre 1 : 3 et 3 : 2.

3. Composition selon la revendication 2, dans laquelle le rapport pondéral du mercaptobenzothiazole au tolyltriazole est compris entre 1 : 1,5 et 1,5 : 1.

4. Procédé pour inhiber la corrosion du cuivre et des alliages de cuivre en contact avec un système aqueux qui comprend d'ajouter au système aqueux, de sorte que sa concentration est maintenue au moins à 0,1 ppm, une composition constituée de mercaptobenzothiazole et de tolyltriazole, dans laquelle ppm signifie « parties par million en poids ».

5. Procédé selon la revendication 4, dans lequel le rapport pondéral du mercaptobenzothiazole au tolyltriazole est compris entre 1 : 3 et 3 : 2.

6. Procédé selon la revendication 4, dans lequel le rapport pondéral du mercaptobenzothiazole au tolyltriazole est compris entre 1 : 1,5 à 1,5 : 1.

7. Procédé selon l'une quelconque des revendications 4 à 6, dans lequel de 0,5 à 100 ppm de la composition sont maintenus dans le système.

8. Procédé selon la revendication 7, dans lequel de 1,0 à 10 ppm de la composition sont maintenus dans le système.

9. Procédé selon l'une quelconque des revendications 4 à 8, dans lequel le système comprend jusqu'à 500 ppm d'ions Cl⁻.

10. Procédé selon l'une quelconque des revendications 4 à 8, dans lequel le système aqueux est chloré.